# EUROPÄISCHE PATENTSCHRIFT

(11) **EP 0 932 765 B1**
(45) Veröffentlichungstag und Bekanntmachung des Hinweises auf die Patenterteilung: **10.03.2004**
(21) Anmeldenummer: 98936213.2
(22) Anmeldetag: 18.06.1998
(51) Int. Cl.: F04B 53/16, F04B 1/04

(54) **KOLBENPUMPE**
PISTON PUMP
POMPE A PISTON

(30) Priorität: 30.07.1997 DE 19732770
(43) Veröffentlichungstag der Anmeldung: 04.08.1999
(73) Patentinhaber: ROBERT BOSCH GMBH, 70442 Stuttgart (DE)
(72) Erfinder: HAUSER, Manfred, D-71701 Schwieberdingen (DE); ALAZE, Norbert, D-71706 Markgröningen (DE); MERKLEIN, Dieter, D-87435 Kempten (DE); SCHULLER, Wolfgang, D-74343 Sachsenheim (DE); BAYRHOF, Julius, D-88161 Lindenberg (DE); KREMSREITER, Walter, D-87541 Hindelang (DE); EVERTZ, Joachim, D-87527 Sonthofen (DE); ZIELKE, Jörg, D-87509 Immenstadt (DE); ZITZELSBERGER, Ralf, D-87616 Marktoberdorf (DE); WEH, Andreas, D-87471 Durach (DE); ALLENZON, Bernd, D-87487 Wiggensbach (DE); HELLEBRANDT, Michael, D-87545 Burgberg (DE)
(86) Internationale Anmeldenummer: PCT/DE1998/001670
(87) Internationale Veröffentlichungsnummer: WO 1999/006706

(56) Entgegenhaltungen:
- WO-A-95/03198
- DE-A- 3 907 969
- DE-A- 4 107 979
- DE-A- 4 243 667
- DE-C- 909 178
- GB-A- 2 119 883
- PATENT ABSTRACTS OF JAPAN vol. 096, no. 011, 29. November 1996 & JP 08 177752 A (NISSIN KOGYO KK), 12. Juli 1996

## Beschreibung

### Stand der Technik

Die Erfindung betrifft eine Kolbenpumpe nach der Gattung des Hauptanspruchs.

Es ist eine Vielzahl derartiger Kolbenpumpen bekannt. Beispielhaft sei genannt eine aus der DE 41 07 979 A1 bekannte Kolbenpumpe. Die bekannte Kolbenpumpe weist einen Kolben auf, der in einer Laufbuchse axial verschieblich geführt ist, die in eine Zylinderbohrung eines Pumpengehäuses eingesetzt ist. Ein Verschlußelement in Form eines Deckels ist in die Zylinderbohrung eingesetzt und verschließt diese druckdicht. Von Nachteil ist, dass Laufbuchse und Verschlußelement in separaten Arbeitsgängen in die Zylinderbohrung eingesetzt werden müssen.

Darüber hinaus offenbart die JP 08 177752 A eine gattungsgemäße Kolbenpumpe, bei der das Verschlußelement mit der Laufbuchse radialbeweglich verbunden ist. Diese Verbindung erfolgt jedoch mittelbar über ein hülsenförmiges Element aus Kunststoff. Diese Ausbildung bringt eine erhöhte Teileanzahl und einen Montagemehraufwand mit sich.
Aus der DE 42 43 667 A1 ist es bekannt, ein Verschlußelement mit einer Laufbuchse durch eine Bördelung zu verbinden, ohne dabei jedoch eine Radialbeweglichkeit zwischen beiden Teilen darzustellen. Dies verhindert eine gegenseitige Zentrierung dieser Teile beim Einsetzen in eine Zylinderbohrung des Pumpengehäuses. Im Falle der GB 2 119 883 A sind das Verschlußelement und die Laufbuchse einer Kolbenpumpe zwei getrennte Bauteile ohne gemeinsame Verbindung miteinander.

### Vorteile der Erfindung

Bei der erfindungsgemäßen Kolbenpumpe mit den Merkmalen des Anspruchs 1 ist das Verschlußelement mit der Laufbuchse verbunden, wobei Radialspiel zwischen Verschlußelement und Laufbuchse besteht. Die Laufbuchse wird gemeinsam mit dem an ihr befestigten Verschlußelement in einem Arbeitsgang in die Zylinderbohrung eingesetzt und beispielsweise durch Verstemmen am Verschlußelement in der Zylinderbohrung befestigt und druckdicht abgedichtet. Die erfindungsgemäße Kolbenpumpe hat den Vorteil, daß sie vor dem Einsetzen in das Pumpengehäuse fertigt montiert wird und eine kompakte, gut zu handhabende und robuste Baugruppe bildet. Eine mechanisch überbestimmte.

Anbringung der Laufbuchse mit dem an ihr befestigten Verschlußelement in der Zylinderbohrung des Pumpengehäuses wird vermieden. Dies verhindert Spannungen infolge eines Fluchtungsfehlers zwischen Verschlußelement und Laufbuchse. Die mechanische Festigkeit der Anbringung in der Zylinderbohrung ist ebenso erhöht wie die Sicherheit gegen Undichtigkeit.

Die Unteransprüche haben vorteilhafte Ausgestaltungen und Weiterbildungen der im Hauptanspruch angegebenen Erfindung zum Gegenstand.

Die Kolbenpumpe ist insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylidner oder in mehrere Radbremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenden Bremsanlage wird unabhängig von einer Betätigung des Bremspedals bzw. Gaspedals ein Bremsdruck in einem oder in mehreren Radbremszylindern aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensör eine Betätigung des Bremspedals erfaßt oder bei der die Pumpe zum Füllen eines Speichers der Bremsanlage dient.

### Zeichnung

Die Erfindung wird nachfolgend anhand eines in der Zeichnung dargestellten Ausführungungsbeispiels näher erläutert. Es zeigen
- Figur 1: eine erfindungsgemäße Kolbenpumpe im Achsschnitt ,
- Figur 2: eine Darstellung einer Einzelheit einer abgewandelten Ausführungsform gemäß Pfeil II in Figur 1, und
- Figur 3: eine Stirnansicht auf eine Innenseite eines Verschlußelements der in Figur 1 dargestellten Kolbenpumpe.

### Beschreibung des Ausführungsbeispiels

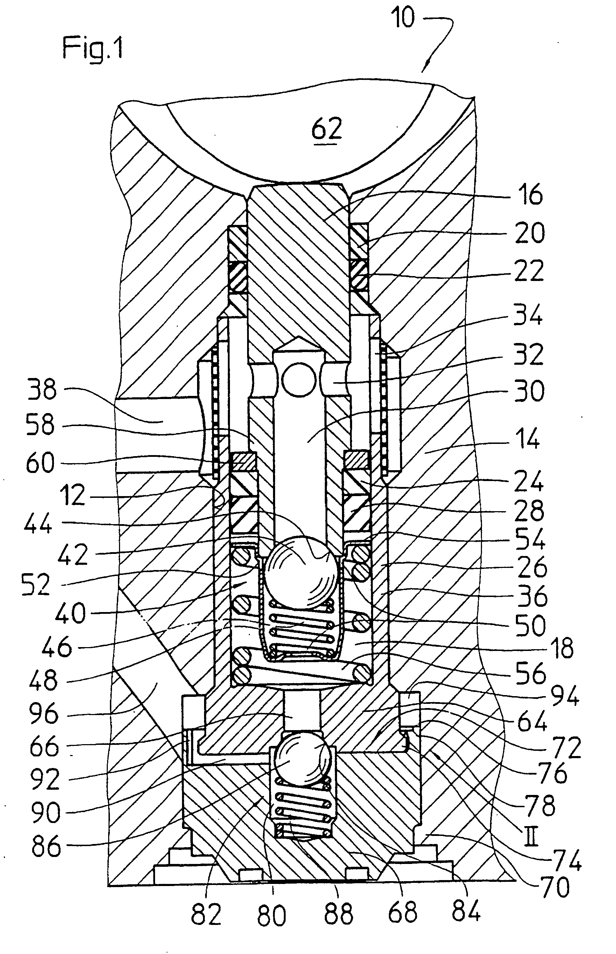

Die erfindungsgemäße, insgesamt mit 10 bezeichnete, in Figur 1 dargestellte Kolbenpumpe ist in eine gestufte Zylinderbohrung 12 eingesetzt, welche in einem Hydraulikblock angebracht ist, der ein Pumpengehäuse 14 bildet. Der Hydraulikblock, von dem in der Zeichnung nur ein die Kolbenpumpe 10 umgebendes Bruchstück dargestellt ist, ist Bestandteil einer schlupfgeregelten, im übrigen nicht dargestellten, hydraulischen Fahrzeugbremsanlage. In ihn sind außer der Kolbenpumpe 10 weitere hydraulische Bauteile wie Magnetventile oder Druckspeicher eingesetzt und hydraulisch miteinander und mit der erfindungsgemäßen Kolbenpumpe 10 verschaltet.

Die Kolbenpumpe 10 weist einen Kolben 16 auf, dessen eines, einem Verdrängungsraum 18 abgewandtes Ende mit einem Führungsring 20 im Pumpengehäuse 14 geführt und mit einem Dichtring 22 abgedichtet ist. Ein anderes, dem Verdrängungsraum 18 zugewandtes Ende des Kolbens 16 ist mit einem Führungsring 24 in einer Laufbuchse 26 der Kolbenpumpe 10 geführt und mit einem Dichtring 28 abgedichtet. Die Laufbuchse 26 ist mit einer Preßpassung in die Zylinderbohrung 12 des Pumpengehäuses 14 eingesetzt. Die Preßpassung bewirkt eine Abdichtung zwischen Ein- und Auslaßseite, d. h. zwischen Nieder- und Hochdruckseite der Kolbenpumpe10.

Für den Pumpeneinlaß ist im Kolben 16 eine axiale Sackbohrung 30 von einer Verdrängungsraumseite her angebracht, die nahe ihres Grundes von Querbohrungen 32 gekreuzt wird. Sack- und Querbohrungen 30, 32 kommunizieren durch Fenster 34 in einer Umfangswand 36 der Laufbuchse 24 mit einer Zustrombohrung 38, die radial zur Kolbenpumpe 10 in dem das Pumpengehäuse 14 bildenden Hydraulikblock angebrachten ist.

Am verdrängungsraumseitigen Ende des Kolbens 16 ist ein Rückschlagventil als Einlaßventil 40 angebracht: Das Einlaßventil 40 weist eine Ventilkugel 42 als Ventilschließkörper auf, die mit einem konischen Ventilsitz 44 zusammenwirkt, der an einer Mündung der Sackbohrung 30 des Kolbens 16 angebracht ist. Eine Schraubendruckfeder als Ventilschließfeder 46 drückt die Ventilkugel 42 gegen den Ventilsitz 44. Ventilkugel 42 und Ventilschließfeder 46 sind in einem Ventilgehäuse 48 aufgenommen, welches als napfförmiges Tiefziehteil aus Blech mit einem etwa dem Durchmesser des Kolbens 16 entsprechenden Durchmesser hergestellt und mit Durchströmöffnungen 50 versehen ist. Das Ventilgehäuse 48 weist eine Ringstufe 52 auf, mit der es an einer dem Verdrängungsraum 18 zugewandten Stirnseite des Kolbens 16 anliegt. Es weist einen mit ihm einstückigen, nach außen stehenden Radialflansch 54 auf, gegen den eine Schraubendruckfeder als Kolbenrückstellfeder 56 drückt und auf diese Weise das Ventilgehäuse 48 am Kolben 16 hält. Der Radialflansch 54 hält zugleich den Führungsring 24 und den Dichtring 28 zwischen sich und einem sich an einer Ringschulter 58 des Kolbens 16 abstützenden Stützring 60 in axialer Richtung auf dem Kolben 16.

Die Kolbenrückstellfeder drückt über den Radialflansch 54 des Ventilgehäuses 48 den Kolben 16 in axialer Richtung gegen einen elektromotorisch antreibbaren Exzenter 62, der zum Antrieb des Kolbens 16 zu einer hin- und hergehenden Hubbewegung in an sich bekannter Weise dient.

Auf einer Verdrängungsraumseite weist die Laufbuchse 26 einen mit ihr einstückigen Laufbuchsenboden 64 auf, in dem ein durchgehendes Mittelloch 66 für den Pumpenauslaß angebracht ist.

Auf der Verdrängungsraumseite ist ein Verschlußelement 68, das die Form eines zylindrischen Stopfens aufweist, in die Zylinderbohrung, eingesetzt und durch eine Verstemmung 70 befestigt und fluiddicht abgedichtet. Das Verschlußelement 68 hält zugleich die Laufbuchse 26 in der Zylinderbohrung 12.

Auf einer der Laufbuchse 26 zugewandten Stirnseite des Verschlußelements 68 ist eine flache, vorzugsweise zylindrische Ausnehmung 72 im Verschlußelement 68 angebracht, in die die Laufbuchse 26 mit ihrem Ende eingesetzt ist. Zwischen der Ausnehmung 72 und der Laufbuchse 26 besteht ein Radialspiel, so daß das Verschlußelement 68 in Bezug auf die Laufbuchse 26 in radialer Richtung beweglich ist. Laufbuchse 26 und Verschlußelement 68 richten sich beim Einsetzen in die Zylinderbohrung 12 fluchtend zueinander aus.

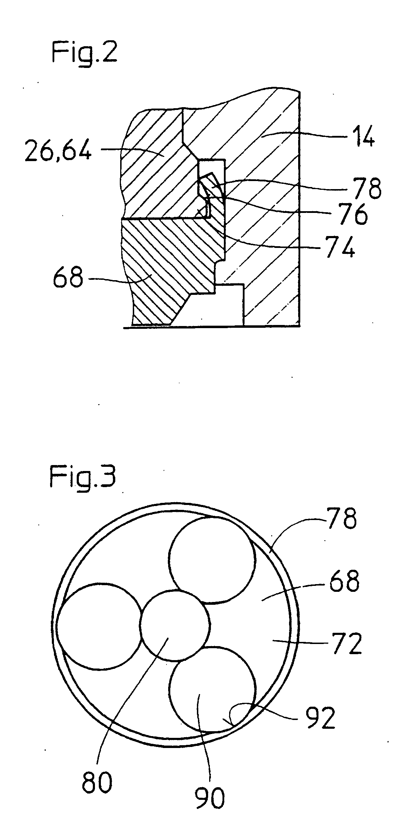

Zur Befestigung des Verschlußelements 68 an der Laufbuchse 26 weist die Laufbuchse 26 an ihrem in das Verschlußelement 68 eingesetzten Ende einen nach außen überstehenden Radialbund 74, der eine Hinterschneidung 76 bildet, auf, die von einem Rand 78 der Ausnehmung 72 des Verschlußelements 68 hintergriffen wird. Um den Rand 78 in Hintergriff mit der Hinterschneidung 76 zu bringen, ist er radial nach innen beispielsweise durch Verstemmen oder wie in Figur 2 dargestellt, durch Bördeln, umgeformt. Das Verschlußelement 68 ist auf diese Weise mit Radialspiel an der Laufbuchse 26 befestigt. Zur Befestigung reicht eine Verstemmung oder ein Bördeln an drei bis vier Stellen des Umfangs aus.

An einem Grund der Ausnehmung 72 ist ein axiales Sackloch 80 im Verschlußelement 68 angebracht, in welchem ein Rückschlagventil als Auslaßventil 82 untergebracht ist, das mit einem konischen Ventilsitz 84 zusammenwirkt, weicher an einer dem Verschlußelement 68 zugewandten Mündung des Mittellochs 66 im Laufbuchsenboden 64 angebracht ist. Im Sackloch 80 des Verschlußelements 68 ist eine Ventilkugel 86 als Ventilschließkörper eingesetzt, welche von einer Schraubendruckfeder 88 als Ventilschließfeder gegen den Ventilsitz 84 gedrückt wird.

Als Pumpenauslaß sind drei kreisförmige Vertiefungen 90 äquidistant über den Umfang verteilt im Grund der Ausnehmung 72 des Verschlußelements 68 angebracht (Figur 3). Diese Vertiefungen 90 reichen innen vom Sackloch 80, welches bei geöffneter Ventilkugel 86 mit dem Mittelloch 66 im Laufbuchsenboden 64 kommuniziert, bis außen in den die Ausnehmung 72 umgebenden Rand 78 hinein. Die Vertiefungen 90 setzen sich als Rundnuten 92 in axialer Richtung im Rand 78 fort. Die Rundnuten 92 münden an einer offenen Stirnseite der Ausnehmung 72 in einen Ringkanal 94, der zwischen Pumpengehäuse 14, Laufbuchse 26 und Verschlußelement 68 eingeschlossen ist. Vom Ringkanal 94 führt eine Auslaßbohrung 96 in dem das Pumpengehäuse 14 bildenden Hydraulikblock weg. Die kreisförmigen Vertiefungen 90 am Grund der Ausnehmung 72 des Verschlußelements 68 und die Rundnuten 92 im Rand 78 des Verschlußelements 68, bilden von einem Innenraum der Kolbenpumpe 10 nach außen durchgehende Nuten, die vom Laufbuchsenboden 64 zu abgewinkelten Auslaßkanälen 90, 92 abgedeckt werden. Zur Bildung der Auslaßkanäle können beispielsweise auch Nuten im Grund der Ausnehmung 72 des Verschlußelements 68 angebracht sein, die den Rand 78 der Ausnehmung 72 ohne Abwinklung direkt nach außen als zur offenen Stirnseite der Ausnehmung 72 hin offene Ausbrüche durchsetzen (nicht dargestellt).

Anstelle des nach außen überstehenden Radialbundes 74 kann eine Hinterschneidung 76 beispielsweise auch durch eine umlaufende Nut oder durch einzelne Vertiefungen im Umfang der Laufbuchse 26 gebildet sein.

## Patentansprüche

1. Kolbenpumpe mit einem zu einer hin- und hergehenden Hubbewegung antreibbaren Kolben, der in einer Laufbuchse axial verschieblich aufgenommen ist, die in eine Zylinderbohrung eines Pumpengehäuses eingesetzt ist, und mit einem Verschlußelement, das die Zylinderbohrung druckdicht abdichtend am Pumpengehäuse angebracht ist, **dadurch gekennzeichnet, dass** das Verschlußelement (68) und die Laufbuchse (26) gegeneinander radialbeweglich durch einen Umformvorgang miteinander verbunden sind.

2. Kolbenpumpe nach Anspruch 1, **dadurch gekennzeichnet, daß** das Verschlußelement (68) auf einer Verdrängungsraumseite in der Zylinderbohrung (12) angebracht ist.

3. Kolbenpumpe nach Anspruch 1, **dadurch gekennzeichnet, daß** das Verschlußelement (68) eine Ausnehmung (72) aufweist, in die ein Ende der Laufbuchse (26) mit Radialspiel eingesetzt ist, und daß das Verschlußelement (68) eine Hinterschneidung (76) der Laufbuchse (26) mit einem Ausnehmungsrand (78) hintergreift.

4. Kolbenpumpe nach Anspruch 1, **dadurch gekennzeichnet, daß** die Laufbuchse (26) einen mit ihr einstückigen Laufbuchsenboden (65) aufweist, der mit einem einen Ventilsitz (84) aufweisenden Fluiddurchlaß (66) versehen ist.

5. Kolbenpumpe nach Anspruch 4, **dadurch gekennzeichnet, daß** im Verschlußelement (68) ein mit dem Ventilsitz (84) des Laufbuchsenbodens (64) zusammenwirkendes Rückschlagventil (82) angeordnet ist.

6. Kolbenpumpe nach Anspruch 1, **dadurch gekennzeichnet, daß** das Verschlußelement (68) und/oder die Laufbuchse (26) eine von innen nach außen führende Nut in einer der Laufbuchse (26) bzw. dem Verschlußelement zugewandten Fläche aufweist, die von der Laufbuchse (26) bzw. dem Verschlußelement (68) zu einem Aus- oder Einlaßkanal (90, 92) der Kolbenpumpe (10) abgedeckt wird.

## Claims

1. Piston pump, with a piston which is capable of being driven in a to-and-fro stroke movement and is received axially displaceably in a liner which is inserted into a cylinder bore of a pump casing, and with a closing element which is attached to the pump casing so as to seal off the cylinder bore in a pressure-type manner, **characterized in that** the closing element (68) and the liner (26) are connected to one another, so as to be radially moveable relative to one another, by means of a forming operation.

2. Piston pump according to Claim 1, **characterized in that** the closing element (68) is attached in the cylinder bore (12) on a displacement-space side.

3. Piston pump according to Claim 1, **characterized in that** the closing element (68) has a recess (72), into which one end of the liner (26) is inserted with radial play, and **in that** the closing element (68) engages, with a recess edge (78), behind an undercut (76) of the liner (26).

4. Piston pump according to Claim 1, **characterized in that** the liner (26) has a liner bottom (65) which is in one piece with it and which is provided with a fluid passage (66) having a valve seat (84).

5. Piston pump according to Claim 4, **characterized in that** a non-return valve (82) cooperating with the valve seat (84) of the liner bottom (64) is arranged in the closing element (68).

6. Piston pump according to Claim 1, **characterized in that** the closing element (68) and/or the liner (26) have/has, in a face confronting the liner (26) or the closing element, a groove which leads from the inside outwards and which is covered by the liner (26) or the closing element (68) to form an outlet or inlet duct (90, 92) of the piston pump (10).

## Revendications

1. Pompe à piston comprenant un piston pouvant être entraîné en un mouvement de course alternatif, coulissant axialement dans une chemise encastrée dans un alésage de cylindre d'un corps de pompe, et un élément obturateur rapporté au corps de pompe et fermant l'alésage de cylindre de manière étanche à la pression,
**caractérisée en ce que**
l'élément obturateur (68) et la chemise (26) sont assemblés l'un à l'autre par une opération de déformation en restant radialement, mobiles l'un par rapport à l'autre.

2. Pompe à piston selon la revendication 1,
**caractérisée en ce que**
l'élément obturateur (68) est fixé dans l'alésage de cylindre du côté de la chambre de refoulement.

3. Pompe à piston selon la revendication 1,
**caractérisée en ce que**
l'élément obturateur (68) présente un évidement (72) dans lequel une extrémité de la chemise (26) est emboîtée avec jeu radial et l'élément obturateur (68) retient par l'arrière une contre-dépouille (76) de la chemise (26) par un bord (78) de l'évidement.

4. Pompe à piston selon la revendication 1,
**caractérisée en ce que**
la chemise (26) présente un fond de chemise (65) d'une seule pièce avec elle qui est muni d'un passage de fluide (66) présentant un siège de soupape (84).

5. Pompe à piston selon la revendication 4,
**caractérisée en ce que**,
dans l'élément obturateur (68) est disposé un clapet anti-retour (82) qui coopère avec le siège de soupape (84) du fond de chemise (64).

6. Pompe à piston selon la revendication 1,
**caractérisée en ce que**
l'élément obturateur (68) et/ou la chemise (26) présente(nt) une rainure menant de l'intérieur vers l'extérieur, ménagée dans une surface dirigée vers la chemise (26) ou, respectivement vers l'élément obturateur, et qui est recouverte par la chemise (26) ou, respectivement, par l'élément obturateur (68), en formant un canal de sortie ou d'entrée (90, 92) de la pompe à piston (10).
